# EUROPEAN PATENT SPECIFICATION

(11) **EP 3 435 680 B1**
(45) Date of publication and mention of the grant of the patent: **04.09.2019**
(21) Application number: 17183514.3
(22) Date of filing: 27.07.2017
(51) Int. Cl.: H04N 21/8541, H04N 21/41, H04N 21/475, H04N 21/472, G11B 27/11

(54) **TECHNIQUE FOR SELECTING A PATH OF A MULTIPATH AUDIO AND/OR VIDEO STREAM**
TECHNIK ZUR AUSWAHL DES WEGES EINES MEHRWEG-AUDIO- UND/ODER -VIDEOSTROMS
TECHNIQUE DE SÉLECTION D'UN TRAJET D'UN FLUX AUDIO ET/OU VIDÉO À TRAJETS MULTIPLES

(43) Date of publication of application: 30.01.2019
(73) Proprietor: Vestel Elektronik Sanayi ve Ticaret A.S., 45030 Manisa (TR)
(72) Inventor: Uluag, Onur, 45030 Manisa (TR); Bakanoglu, Kagan, 45030 Manisa (TR)
(74) Representative: Schmidt, Steffen J.

(56) References cited:
- US-A1- 2014 040 931
- US-A1- 2016 094 888
- US-A1- 2017 090 437

## Description

### Technical Field

The present disclosure generally relates to a system and a method for selecting a path of a multipath audio and/or a video stream having multiple possible paths of consecutive audio clips and/or video scenes, respectively.

### Background

An intelligent home device interaction method based on an intelligent television video scene of a movie having a plurality of scenes is described in AU 2015396659 A1. The method includes: presetting a database to store a plurality of image features on different video scenes and an operation data on intelligent home appliance corresponding to different video scene types. A plurality of video data currently playing on the smart TV is obtained, and the current video scene type is determined. Based on the current video scene type, a connection with the intelligent home appliances is started, and it is checked as to whether the connection between the smart TV and the intelligent home appliance is successful or not. If the connection between the smart TV and the intelligent home appliance is detected to be successful, then the intelligent home appliances are controlled to perform the corresponding operations. The scene elements of the video contents playing on TV may be analyzed, and various intelligent home appliances may be controlled to automatically change the surrounding environment conditions of the user, thus making the user immersive, and improving the interaction between the smart TV and intelligent home appliances, which has facilitated a user to watch a video.

US 2017/090437 A1 generally describes adjusting operation of a smart device to customize an environment surrounding a computing device. The adjustment is made via an application program interface having a language known to the smart device, and via a transport abstraction module to internally route data in a transfer stack and facilitate delivery of the data to the smart device.

Further prior art can be found in, for example, US 2016/0094888 A1, which generally relates to systems and methods for presenting user selected scenes, and US 2014/0040931 A1, which generally relates to dynamic customization and monetization of audio-visual content.

However, there is a need for improvements of intelligent video- and/or audio-streaming systems.

### Summary

It has been realized that systems according to the prior art lack any two-way interactivity. In particular, the audience may not be able to interact with smart home devices, home automation devices or Internet of Things (IoT) devices in order to change the scenes of, for example, a video stream.

The invention is set out in the independent claims. Preferred embodiments of the invention are outlined in the dependent claims.

According to the present disclosure, there is therefore provided a system for playing an audio and/or video stream having multiple possible paths of consecutive audio clips and/or video scenes, the system comprising: an output unit for outputting the audio and/or video stream, and an interactivity unit coupled to the output unit, wherein the interactivity unit is configured to: receive information relating to an interaction of a user of the system with one or more devices coupled to the system, and select a said path of consecutive audio clips and/or video scenes of the audio and/or video stream, to be output by the output unit, based on the received information. A two-way interactivity between the audio and/or video stream output by the system and the user interacting with one or more devices may thereby be established.

The output unit may hereby comprise one or more of a speaker or speaker system for outputting the audio stream, as well as a display unit, such as, but not limited to a TV, a beamer unit, a projector and a virtual reality (VR) device for outputting the video stream.

The system as described herein may be used, for example, for video stream players such as, but not limited to CD/DVD/Blu-ray media players, online video streams such as, but not limited to YouTube, and digital video broadcast streams such as IPTV. Variants of the system of the present disclosure may include multipath movie streams and interaction logic, which enables a user of the system to interact with one or more devices coupled to or in communication with the system to change the next scene of the video stream and/or the next audio clip of the audio stream. A two-way interactivity is hereby made possible such that the user of the system may be able to, for example, influence the path of consecutive audio clips and/or video scenes which is then output by the output unit.

The one or more devices with which the user of the system may interact, and/or other devices which are arranged within the environment of the system may be controlled by the system, in particular based on the content output by the output unit. A two-way interactivity between the system and the one or more devices with which the user of the system may interact is hereby established.

In some variants of the system, the interactivity unit is further configured to compare the received information with a logic of a script affiliated with a corresponding, respective one of the audio clips and/or one of the video scenes to perform the selection. The script may hereby be downloaded by the system, for example via the interactivity unit, from an interactivity script file database. In some example implementations, the interactivity script file database is integral to the system. In some variants of the system, the interactivity script file database may be accessed by the interactivity unit only if and when the interactivity unit compares the received information regarding the interaction of the user of the system with the one or more devices coupled to the system with the logic of the script affiliated with a corresponding, respective one of the audio clips and/or one of the video scenes to perform the selection. Using an interactivity script file database external to the system may allow for reducing the size of any data which may be stored in a memory of the system. On the other hand, providing an interactivity script file database which is integral to the system may allow for selecting the path of consecutive audio clips and/or video scenes based on the above-described comparison at a faster rate.

It is to be noted that one or both of the interactivity script file database and the interactivity unit may be arranged in a cloud-based environment. This may allow outsourcing some of the computing requirements into the cloud, the computing power of which may exceed that of a system which the interactivity unit is locally integral to.

In some variants, the system is further configured to: divide a file comprising the script into fractions, and embed each of the fractions inside a corresponding, respective one of the audio clips and/or one of video scenes. This may allow for the system not having to download the full script, but only the required one. In this example implementation, the first scene of a video stream and/or the first audio clip of an audio stream may contain a prerequisite list of video and/audio files.

In some further variants, the system is configured to prohibit, dependent on one or more predetermined device classes and/or device configurations of the device or devices coupled to the system, one or both of: one or more predetermined paths of the multiple possible paths of consecutive audio clips and/or video scenes to be selected for output by the output unit; and playing any part of the audio and/or video stream. This may be particularly useful if one or more parts of the audio and/or video stream are, for example, incompatible with the one or more devices and/or the configurations of those devices the user may interact with, and/or of those devices the user may not interact with but are within the environment of the system and which are controlled by the latter. The device classes may hereby relate to the type of device or devices (for example, light switch, air conditioner, and others, as will be further outlined below). Device configurations may relate, for example, to a particular setting or mode of operation of a device. It will be appreciated that many types of configurations are encompassed within the present disclosure, in particular depending on the device class or type used.

In some example implementations in which the system is configured to prohibit one or more predetermined paths among the multiple possible paths of consecutive audio clips and/or video scenes to be selected for output by the output unit, the system may only control those devices which are compatible with a selected path, or the paths from which one is to be selected may be limited to those to which the device or devices are compatible with.

In some variants, the system is further configured to automatically detect the device classes and/or the device configurations of the devices coupled to the system. This may allow for the system to exclude, from the outset, one or more paths with which the detected one or more devices are not compatible with.

In some further implementations, the system is configured to prompt the user of the system to purchase an audio file and/or a video dependent on the device classes and/or the device configurations of the devices coupled to the system prior to the output unit being able to output the audio and/or video stream (or any particular parts thereof). This may, for example, guarantee that any paths from which the system may select one path are compatible with the one or more devices with which the user may or may not interact directly to influence the path of the audio and/or video stream to be taken.

In some examples of the system, the information received by the interactivity unit is based on the user of the system interacting with one or more smart home devices. This may be particularly advantageous as the system may be able interact with the one or more smart home devices based on, for example, ZigBee, Z-Wave, Bluetooth, Wi-Fi, and others, thereby allowing, for example, for a simplified setup of the system and connection of the system with the one or more devices arranged within the environment of the system.

In some variants, the system further comprises an Internet of Things, IoT, application programming interface configured to communicate with the one or more devices, wherein the one or more devices comprise Internet of Things devices. The IoT application programming interface may hereby be coupled to the interactivity unit. The IoT devices may comprise, for example, lights, wall plugs, mobile phones and other devices, as will be further outlined below. The IoT environment may allow for coupling the one or more IoT devices to the system in a simple manner.

In some further example implementations, the system is further configured to pause the audio and/or video stream or turn the audio and/or video stream into a loop at a predetermined end of one or more of the audio clips and/or video scenes, and continue the audio and/or video stream with the selected path according to the user's interaction with the one or more devices. This may allow guaranteeing that a certain path among the plurality of paths is selected and which deviates from an otherwise default sequence/path of consecutive audio clips and/or video scenes.

Therefore, in some variants, the system is further configured to continue outputting the audio and/or video stream according to a predetermined path if a time period, within which no information relating to the interaction of the user of the system with the one or more devices, exceeds a predetermined threshold time period. This may be particularly advantageous as it may be desirable to ensure that the audio and/or a video streams are completed within a predetermined amount of time.

In some further example implementations of the system, the user interaction with the one or more devices comprises a conditional interaction which is required, within the threshold time period, to have been received by the interactivity unit for the audio and/or video stream to be continued. The conditional interaction may hereby be, for example, a type of interaction, a length of interaction, a strength of interaction, an interaction causing a certain signal amplitude, and others. This may allow for a further refinement for selecting a particular one of the multiple possible paths.

In some variants of the system, the selection of the path by the interactivity unit is responsive to the received information relating to one or more of the following, and detectable by the one or more devices and/or the system: (i) the user changing a brightness of an environment surrounding the system, (ii) the user changing a temperature of the environment, (iii) the user performing a predetermined motion, (iv) the user causing a predetermined sound or sound pattern to be emitted, (v) the user touching one or more of the one or more devices; (vi) the user entering a password into one or more of the one or more devices, (vii) a body temperature or body temperature change of the user, (viii) a predetermined gas and/or smoke muffling one or both of the environment and the one or more devices, (ix) a gas actuator being activated by the user, and (x) a user condition being detected using a device wearable by the user.

As will be appreciated, certain devices may be integral to the system in order for the above examples to be implemented when the path is selected by the interactivity unit. Therefore, the system may, in some examples, further comprise one or more of: (i) a dimmer for changing the brightness of the environment; (ii) a temperature control unit for changing the temperature of the environment; (iii) an accelerometer and/or camera for detecting the predetermined motion performed by the user, (iv) a microphone for detecting the sound or sound pattern caused by the user, (v) a touch sensor for sensing the touch by the user, (vi) an input unit for inputting the password, (vii) a temperature sensor for sensing the body temperature or a body temperature change of the user, (viii) a gas and/or smoke detector for detecting the gas and/or smoke, (ix) a gas actuator detection unit for detecting the gas actuator being activated by the user, and (x) a wearable device for detecting the user condition.

As will be appreciated, the above may allow for a two-way interactivity between the system and, for example, a dimmer (and others, as outlined above), whereby the system may be configured to not only adjust the setting of the dimmer according to, for example, a virtual environment in the video stream, but the path of the video stream output by the output unit of the system is determined and influenced by the user of the system interacting with, for example, the dimmer (and/or one or more of the other devices as outlined above).

In some example implementations, the system is further configured to indicate to the user which device or devices to interact with to cause the interactivity unit to select the path. This may be particularly advantageous in particular in variants of the system in which it has been determined previously that one or more of the devices may be incompatible with the one or more paths. An indication may be provided to the user in this manner indicating that any interaction with a certain device or with certain devices may not result in, for example, a specific path being taken, the path being influenced or the audio and/or video stream being continued.

In a related aspect of the present disclosure, we describe a method for selecting a path of a multipath audio and/or video stream, the method comprising: playing the stream, downloading a script comprising a logic corresponding to an audio clip of the audio stream and/or a video scene of the video stream, receiving information regarding a user interacting with a device, comparing the received information with the logic, and selecting the path for the stream to be output based on the comparison.

It is to be noted that the steps of the method as outlined above may not necessarily be performed in that particular order. Therefore, any possible alterations of these steps fall within the scope of the corresponding claim appended hereto. For example, the script may be downloaded prior to the stream being played, and/or the information regarding the user interacting with a device may be performed prior to downloading the script.

The above-identified example implementations and variants of the system are equally applicable to the method for selecting a path of a multipath audio and/or a video stream, as outlined above, and equally to any example implementations and variants of the method as outlined throughout the present disclosure.

In some implementations of the method, at least the comparison of the received information with the logic and the selection of the path for the stream to be output based on the comparison are performed in an IoT environment. As outlined above, this may allow for outsourcing any computing implementations into, for example, a cloud-based environment, thereby reducing any computation having to be performed locally, as far as possible, to a minimum.

As outlined above, the system may be implemented in a TV system. We therefore further describe a TV system for playing a movie having a multipath story comprising a plurality of scenes, the TV system being configured to communicate with one or more smart home devices, wherein the TV system is configured to control the one or more smart home devices to simulate an environment of a current scene of the movie, and wherein the TV system is configured to pause after a scene of the movie and to continue with a next scene dependent on the user's interaction with the one or more smart home devices.

### Brief Description of the Drawings

In the following, the present disclosure will further be described with reference to exemplary implementations illustrated in the figures, in which:
- Figure 1: illustrates a schematic diagram of an example multipath scenario according to the present disclosure;
- Figure 2: illustrates a schematic block-diagram of a system according to some variants of the present disclosure;
- Figure 3: illustrates a schematic block-diagram of a system implementation according to some variants of the present disclosure; and
- Figure 4: illustrates a flow diagram of a method according to some variants of the present disclosure.

### Detailed Description

In the following description, for purposes of explanation and not limitation, specific details are set forth in order to provide a thorough understanding of the present disclosure. It will be apparent to one skilled in the art that the present disclosure may be practiced in other implementations that depart from these specific details.

Some implementations of the systems and methods as described herein relate to physical interaction for IP video streams.

As outlined above, examples of the present disclosure generally relate to video stream playing and home automation devices (such as, for example, IoT devices), and more particularly to IP video (or audio/video) streams, digital media, multipath or multi-ending scenarios, physical interaction with video streams over home automation and other connected end-user devices.

Multipath movie streams and interaction logic are outlined with respect to some examples of the present disclosure, in which the logic enables audience to interact with connected devices to change the next scene of the movie stream. A movie may require a list of connected devices with predetermined device classes which are needed as a mandatory prerequisite or as optional devices. As will be further outlined in detail below, a script may be downloaded from the media, such as a recording device (for example CD/DVD/Blu-ray, IP network, IPTV stream etc.), and a script engine may then parse the script.

When a scene requires the audience to input a value from one or more of the connected devices, such as entering a password into a keypad or mobile phone, or switching on/off the lights of the room etc., the system compares the input with the logic of the script of the scene and determines the next movie scene to be shown.

Devices, such as smartphones and IoT devices, connected to the system may be used for the user of the system to physically interact with a video stream to change the next scene of the stream according to one or more possible actions gathered from the user.

Variants of the system and method as described herein may be applied to video games, movie games, IoT devices, VoD applications, IPTV streams, mobile VoD applications, IP video streams and others.

In some implementations, a technique is provided which allows a TV system to control or receive data from, for example, smart home devices disposed in a household in accordance with a movie currently being viewed by a user at the TV system. In particular, the technique may be used by a user to navigate through the scenes of a multipath story of a movie by physically interacting with the smart home devices. After each scene of the movie, in some implementations, the movie pauses (or enters a loop) and continues with the next scene depending on the user's interaction with the smart home devices. For example, when an actor in the movie enters a dark room, the movie pauses and waits for the user to switch the lights on.

In the variants as described herein, the system may control the one or more devices (for example smart home devices) to simulate the current environment of the movie. For example, if the current scene is smoky, a smoke generator may be controlled to start generating smoke and, when the scene is over, a ventilator may be started to clear the environment.

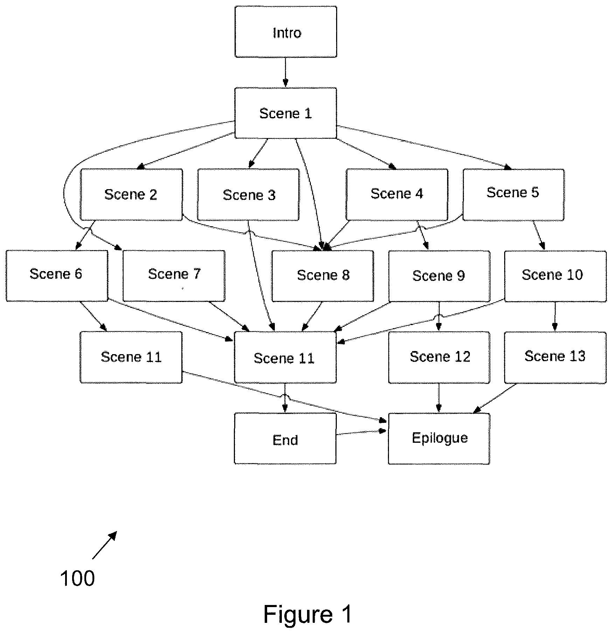

Figure 1 illustrates a schematic diagram 100 of an example multipath scenario according to the present disclosure.

In this example, various paths may be taken between an intro of, in this example, a video stream and an end or epilogue of the video stream. Depending on the interactivity of the user of the system with one or more devices, such as smart home devices, a specific path may be selected by the system based on the user's interaction with the one or more devices.

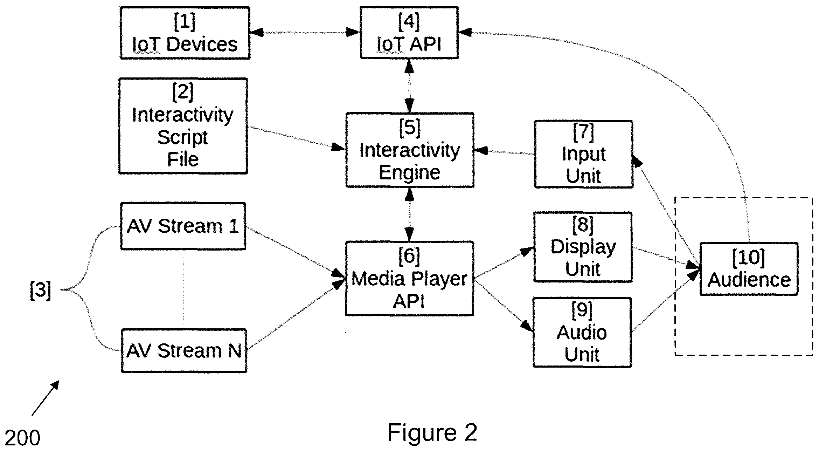

Figure 2 illustrates a schematic block-diagram of a system 200 according to some variants of the present disclosure.

In this example, the system 200 comprises one or more IoT devices 1, which may be connected devices such as, but not limited to lights, wall plugs, mobile phones, dimmers, temperature control units, accelerometers, cameras, microphones, touch sensors, input units for inputting, for example, a password, temperature sensors, gas and/or smoke detectors, gas actuator detection units, gas actuators, wearable devices, window blinds, air conditioners, fans, radiators, and others.

The system 200 further comprises, in this example, an interactivity script file unit 2 which includes a file which may contain logic of a scene which may be used to change a path of scenes in the movie. In some examples, the logic is written in non-compiled script language.

The interactivity script file unit 2 contains, in some examples, a device class or classes and/or device configurations which are required for a particular movie or a particular scene of the movie.

In some example implementations, the interactivity script file unit 2 is divided into parts which can be embedded in corresponding, respective movie scenes. Hereby, the full script may not need to be downloaded. Instead, only the required one may be downloaded by the system and implemented in order for a comparison to be made between the logic of the interactivity script file and the received information which relates to the user interaction with the one or more devices. The first scene of the movie may hereby contain the prerequisite list of movies as well.

In this example, the system 200 comprises N audio/video (AV) streams 3 which relate to the actual movie AV streams. As outlined above, in some example implementations, a script may be embedded in each one or more of the AV streams. An AV stream 3 includes, in this example, several scenes of a video-on-demand (VoD) content, a CD/DVD/Blu-ray movie, or a movie streamed from an IP network or an IPTV stream.

The system 200 further comprises, in this example, an IoT application programming interface (API) 4 which enables the system 200 to communicate with the one or more IoT devices 1. The protocol for the communication between the IoT API 4 and the IoT device(s) 1 may be any standard IoT protocol or proprietary protocol. An adapter layer may be written to enable new protocol implementations.

The system 200 further comprises, in this example, an interactivity unit (interactivity engine) 5. The interactivity unit 5 may be responsible for parsing the script files and obtaining an input from the one or more IoT devices 1. The interactivity unit 5 may then check the conditions of the script logic and determine the next scene of the movie.

In this example, the interactivity unit 5 communicates with the IoT devices 1 over the IoT API 4 and changes the scenes by sending commands to a media player API 6 of the system 200.

The media player API 6 is, in this example, an implementation of an AV stream decoder. It reads the AV stream from the target media such as recorded devices (for example CD, DVD, Blu-ray, IP streams or IPTV), and decodes to stream according to the format of the AV stream. The media player API 6 drives, in this example, the display unit 8 and the audio unit 9.

The system 200 further comprises, in this example, a user input unit 7 which may take the audience's or user's input from devices such as, but not limited to an infrared remote controller (IR RC), radio-frequency remote controller (RF RC) and/or any human input device (HID). The input unit 7 is to be distinguished from the IoT devices the user of the system may interact with to influence the path of movie scenes to be taken. The user input unit 7 sends signals to the interactivity unit 5 so that certain actions may be taken such as, but not limited to selecting a movie, pausing/playing/stopping a movie etc.

In this example, the system 200 comprises a display unit 8 which comprises a display allowing for, for example, motion pictures and subtitles to be shown to the user of the system.

The system 200 further comprises, in this example, an audio unit 9 which may include one or more speakers, headphones and/or wireless audio interfaces which may transmit audio content of the stream to one or more audio player devices.

The audience 10 or user of the system 200 is displayed in Figure 2 and denotes the actor of the system who interacts with the AV stream over one or more connected devices and who is the receiver of the AV content.

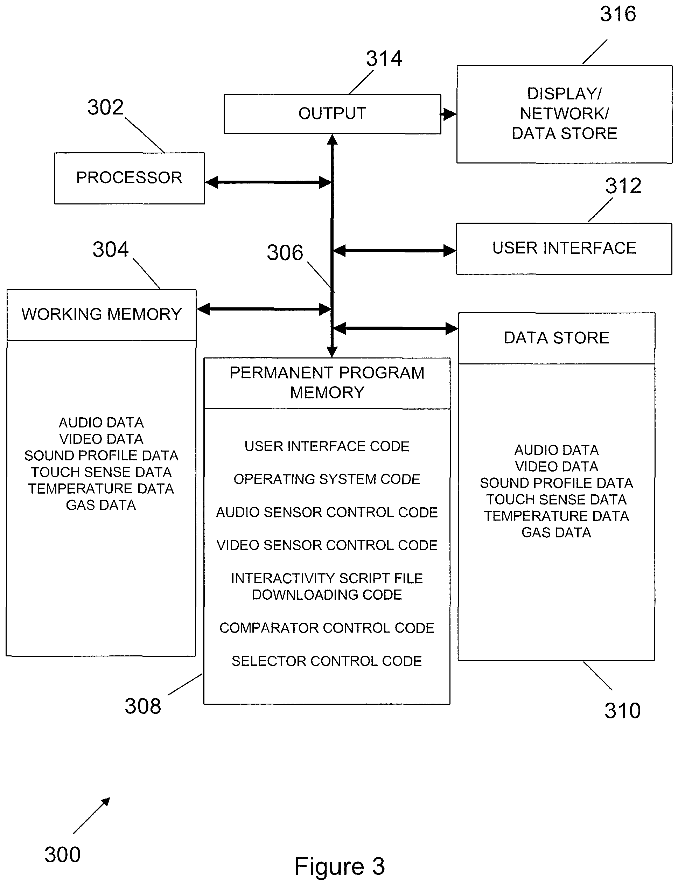

Figure 3 shows a schematic block-diagram of a system 300 according to some variants as described herein.

Broadly speaking, the system 300 comprises a suitably programmed general purpose processor 302. The system 300 further comprises working memory 304, permanent program memory 308, and a data store 310 all linked by a common data line (bus) 306.

In this example, a user interface 312 is also provided for configuring the system 300. User interface 312 can also be used as an input to receive, for example, one or more of audio data, video data, sound profile data, touch sense data, temperature data, gas data and others. The system 300 also includes an output 314 connected to one or more of a display, a data store and a network (for example a cloud) 316 in order to display, store or distribute, for example, any one or more of audio data, video data, sound profile data, touch sense data, temperature data, gas data and others.

The skilled person will appreciate that additionally or alternatively other forms of storage/output may be employed.

In this example, working memory 304 is used for holding (which may be transient), processing and manipulating audio data, video data, sound profile data, touch sense data, temperature data, gas data and others.

Permanent program memory 308 stores operating system code (which can be platform independent) comprising (optional) user interface code, operating system code, audio sensor control code for controlling one or more audio sensors, video sensor control code for controlling one or more video sensors (or cameras), interactivity script file downloading code for downloading an interactivity script file including a logic of, for example a scene or scenes, comparator control code for comparing the downloaded logic with information relating to an interaction of the user of the system with one or more devices (such as, for example, smart home devices), selector control code for selecting a certain path of the above-identified multipath scenario to be taken.

These codes are loaded and implemented by processor 302 to provide corresponding functions for the system 300.

Some or all of these codes may be provided on a carrier medium, which may be a removable storage medium, for example a CD-ROM.

Data store 310 stores audio data obtained via the one or more audio sensors, video data obtained via one or more video sensors (such as cameras), sound profile data obtained via one or more microphones, touch sense data obtained via one or more touch sensors (of the one or more devices), temperature data and gas data which may also be obtained via the one or more devices (such as smart home devices).

The present disclosure further provides processor control code to implement the above-described systems and methods, for example on a general purpose computer system or on a digital signal processor (DSP). The code is provided on a non-transitory physical data carrier such as a disk, CD- or DVD-ROM, programmed memory such as non-volatile memory (for example flash) or read-only memory (Firmware). Code (and/or data) to implement variants of the present disclosure may comprise source, object or executable code in a conventional programming language (interpreted or compiled) such as C, or assembly code, or code for a hardware description language. As the skilled person will appreciate, such codes and/or data may be distributed between a plurality of coupled components in communication with one another.

Data stored in the data store 310 and in the working memory 304 as well as code stored in the permanent program memory 308 may alternatively or additionally relate to one or more of the following devices and types of interactions the user may have with the one or more devices:
- Lighting: For instance, if the actor or actress enters into a dark room in the movie, the movie may pause or enter a loop and the movie may not be continued until the audience switches the light or lights on (equivalent procedure for the actor or actress going from one environment into a brighter one);
- Temperature sensor(s): For instance, a wearable temperature sensor may sense the body temperature of the audience. In the movie scene, the actor or actress may warm up near a fireplace such that it may be expected that the audience warms up herself or himself above a predetermined threshold temperature change for the movie to be continued or the stream to branch off to a different stream according to whether the audience/user's body temperature has changed by at least the predetermined threshold temperature change;
- Accelerometer(s): For instance, jumps of the audience/user may be detected;
- Dimmer(s): For instance, it may be detected if the audience/user has set the device(s) to the correct value(s) or not;
- Air Conditioner(s): For instance, it may be detected as to which temperature value has been selected by the audience/user;
- Heater(s): Equivalent to the principle as described above with reference to the air conditioner(s);
- Doorbell(s): For instance, it may be detected if the audience/user rings the doorbell(s) or not;
- Microphone(s): For instance, sound or a sound pattern generated by the audience/user may be detected;
- Alarm(s): For instance, it may be detected if an alarm is activated or not by the audience/user;
- Siren(s): Equivalent to the principle as described above with reference to the doorbell(s);
- Keypad: For instance, during a movie, there may be a puzzle the actor or actress tries to solve. When the scene at which a password may have to be entered occurs, the stream may be paused or entered into a loop by the player such that the audience/user is prompted to enter a password. Depending on the answer input by the audience/user, the movie determines the next stream to be shown;
- Gas detector(s): A certain type of gas or gases may be detected;
- Smoke detector(s): Smoke may be detected;
- Gas actuator(s): One or more gas actuators may be activated by the audience/user of the system;
- Foam machine(s): For instance, if a scene in the movie is smoky, the foam machine(s) may be used to simulate the same environment;
- Ventilation: May be used to clear the environment of the system and/or the one or more devices (such as smart home devices) from smoke when the corresponding scene is over. This actuation command may, in some examples, not be included in the stream, but may be determined by, for example, a Smart Player by comparing the smoke level of scenes;
- Fan(s): Equivalent procedure as outlined above with reference to the ventilation. However, the fan or fans may additionally or alternatively be used to provide a certain wind effect;
- Phone(s): May be used to perform one or more of fake calls, phone alerts (such as SMS, notifications, vibration via a mobile application), obtaining an audience input as an answering phone calls, entering text messages, shaking the phone, entering passwords, choosing items etc.;
- Camera(s): May be used to detect, for example, emotions and/or motions of the audience/user;
- Motor(s): May relate to any kind of actuation which may be advised by the Smart Player to the audience/user to select a correct matching;
- Shade(s), curtain(s), blind(s): may be used to change the brightness;
- On/off switch(es): May be used as a kind of actuation which may be advised by the Smart Player to the audience/user to select a correct matching;
- Wearable device(s): May be used to detect a condition of the audience/user. In some example implementations, the operation may be performed as follows.

The interactivity unit 5 may be capable of receiving information as to which class or classes of devices exist in the audience's setup from the IoT API 4.

The interactivity unit 5 may then form a checklist using information obtained from the interactivity script file unit 2 which lists the required device class(es) for the user of the system to be able to watch a certain movie.

Any required device types of the IoT devices 1, which may be mandatory or optional for the user to watch a certain movie, are listed, in this example, in the interactivity script file unit 2. The required device or devices may be used to block the user of the system to watch the movie, which may then only be accessed if the user purchases the movie.

The audience/user then selects the movie and starts watching the movie. The movie starts with the first AV stream. After each AV stream, the movie pauses or is entered into a loop. The audience/user may then have to interact with one or more of the IoT devices.

The movie continues with a certain scene depending on the interaction of the audience/user with one or more sensors or devices according to the flow stated in the interactivity script file.

In some example implementations, there may be a time period within which the user has to interact with one or more of the devices, which may be a conditional interaction (such as entering the correct password). Once this predetermined time period has lapsed without the interaction or conditional interaction to have occurred, the movie may be continued with a default path of scenes.

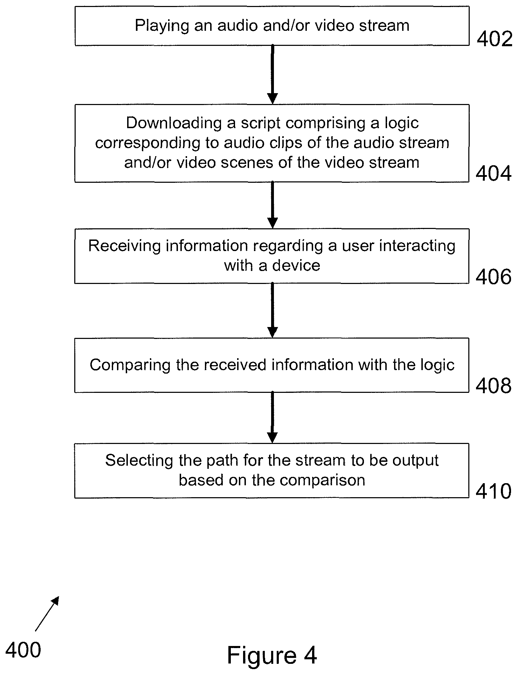

Figure 4 illustrates a flow diagram of an example method according to some variants as described herein.

In this example, the method 400 starts by playing an audio and/or video stream at step 402. A script is then downloaded which comprises a logic which corresponds to audio clips of the audio stream and/or video scenes of the video stream (step 404). Information regarding an input by a user into a device is then received at step 406. The received information is then compared with the logic at step 408. Based on the comparison at step 408, the path for the stream which is to be output may then be selected at step 410.

No doubt many other effective alternatives will occur to the skilled person. It will be understood that the present disclosure is not limited to the described variants and encompasses modifications apparent to those skilled in the art and lying within the scope of the claims appended hereto.

It is to be noted in this regard that any references throughout the description as to a movie or a scene of the movie are equally applicable to an audio stream or a combination of a video stream and an audio stream.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects.

## Claims

1. A system (200) for playing an audio and/or video stream having multiple possible paths of consecutive audio clips and/or video scenes, the system (200) comprising:
an output unit (8, 9) for outputting the audio and/or video stream, and
an interactivity unit (5) coupled to the output unit (8, 9), wherein the interactivity unit (5) is configured to:
receive information relating to an interaction of a user of the system (200) with one or more user interaction devices (1) the user can interact with to provide an input, wherein the one or more user interaction devices (1) are coupled to the system (200), and
select a said path of consecutive audio clips and/or video scenes from the multiple possible paths of the audio and/or video stream, to be output by the output unit (8, 9), based on the received information;
**characterized in that** the system (200) is configured to prohibit, dependent on one or more predetermined device classes of the user interaction device or devices (1) coupled to the system (200):
one or more predetermined paths of the multiple possible paths of consecutive audio clips and/or video scenes to be selected for output by the output unit (8, 9).

2. A system (200) as claimed in claim 1, wherein the system (200) is configured to prohibit the one or more predetermined paths of the multiple possible paths of consecutive audio clips and/or video scenes to be selected for output by the output unit (8, 9) and/or the playing of any part of the audio and/or video stream dependent on whether one or more parts of the audio and/or video stream are incompatible with the user interaction device or devices.

3. A system (200) as claimed in claim 1 or 2, wherein the interactivity unit (5) is further configured to compare the received information with a logic of a script affiliated with corresponding, respective audio clips and/or video scenes to perform the selection.

4. A system (200) as claimed in claim 3, wherein the system (200) is configured to:
divide a file comprising the script into fractions, and
embed each of the fractions inside a corresponding, respective one of the audio clips and/or one of video scenes.

5. A system (200) as claimed in any preceding claim, wherein the system (200) is configured to prohibit the one or more predetermined paths of the multiple possible paths of consecutive audio clips and/or video scenes to be selected for output by the output unit (8, 9) and/or the playing of any part of the audio and/or video stream dependent on a type of the user interaction device or devices.

6. A system (200) as claimed in any preceding claim, wherein the system (200) is configured to automatically detect the device classes of the user interaction devices (1) coupled to the system (200).

7. A system (200) as claimed in any preceding claim, wherein the system (200) is further configured to prompt the user of the system (200) to purchase an audio file and/or a video dependent on the device classes of the user interaction devices (1) coupled to the system prior to the output unit (8, 9) being able to output the audio and/or video stream or any predetermined clips or scenes, respectively, thereof.

8. A system (200) as claimed in any preceding claim, wherein the information received by the interactivity unit (5) is based on the user of the system (200) interacting with one or more smart home devices configured to interact with the system (200) using ZigBee, Z-Wave, Bluetooth or Wi-Fi.

9. A system (200) as claimed in any preceding claim, further comprising an Internet of Things, IoT, application programming interface (4) configured to communicate with the one or more user interaction devices (1), wherein the one or more user interaction devices (1) comprise Internet of Things devices.

10. A system (200) as claimed in any preceding claim, further configured to:
pause the audio and/or video stream or turn the audio and/or video stream into a loop at a predetermined end of one or more of the audio clips and/or video scenes, and
continue the audio and/or video stream with the selected path according to the user's interaction with the one or more user interaction devices (1).

11. A system (200) as claimed in claim 10, further configured to continue outputting the audio and/or video stream according to a predetermined path if a time period, within which there is no information relating to the interaction of the user of the system (200) with the one or more user interaction devices (1), exceeds a predetermined threshold time period, in particular wherein the user interaction with the one or more user interaction devices (1) comprises a conditional interaction which is required to have been received by the interactivity unit within the threshold time period for the audio and/or video stream to be continued.

12. A system (200) as claimed in any preceding claim, wherein the selection of the path by the interactivity unit is responsive to the received information relating to one or more of the following, and detectable by the one or more user interaction devices (1) and/or the system (200):
(i) the user changing a brightness of an environment surrounding the system,
(ii) the user changing a temperature of the environment,
(iii) the user performing a predetermined motion,
(iv) the user causing a predetermined sound or sound pattern to be emitted,
(v) the user touching one or more of the one or more user interaction devices;
(vi) the user entering a password into one or more of the one or more devices,
(vii) a body temperature or body temperature change of the user,
(viii) a predetermined gas and/or smoke muffling one or both of the environment and the one or more user interaction devices,
(ix) a gas actuator being activated by the user, and
(x) a user condition being detected using a device wearable by the user.

13. A system (200) as claimed in any preceding claim, configured to indicate to the user which user interaction device or devices (1) to interact with to cause the interactivity unit to select a said path.

14. A method for selecting a path of a multipath audio and/or video stream, the method comprising:
playing (402) the stream,
downloading (404) a script comprising a logic corresponding to audio clips of the audio stream and/or video scenes of the video stream,
receiving (406) information regarding a user interacting with an input device,
comparing (408) the received information with the logic, and
selecting (410) the path for the stream to be output based on the comparison,
**characterized in that** the method further comprises prohibiting, dependent on one or more predetermined device classes of a user interaction device or devices (1) the user can interact with to provide an input and wherein the user interaction device or devices (1) are coupled to a system (200) for playing the audio and/or video stream:
one or more predetermined paths of the multipath audio and/or video stream for output.

15. A method as claimed in claim 14, wherein at least the comparison of the received information with the logic and the selection of the path for the stream to be output based on the comparison are performed in an IoT environment.

## Patentansprüche

1. System (200) zum Abspielen eines Audio- und/oder Videostreams mit mehreren möglichen Pfaden von aufeinanderfolgenden Audioclips und/oder Videoszenen, wobei das System (200) umfasst:
eine Ausgabeeinheit (8, 9) zum Ausgeben des Audio- und/oder Videostreams, und
eine Interaktivitätseinheit (5), die mit der Ausgabeeinheit (8, 9) gekoppelt ist, wobei die Interaktivitätseinheit (5) dazu eingerichtet ist:
eine Information bezogen auf eine Interaktion eines Benutzers des Systems (200) mit einem oder mehreren Benutzerinteraktionsgeräten (1) zu empfangen, mit denen der Benutzer interagieren kann, um eine Eingabe bereitzustellen, wobei das eine oder die mehreren Benutzerinteraktionsgeräte (1) mit dem System (200) gekoppelt sind, und
den von der Ausgabeeinheit (8, 9) auszugebenden Pfad der aufeinanderfolgenden Audioclips und/oder Videoszenen aus den mehreren möglichen Pfaden des Audio- und/oder Videostreams basierend auf der empfangenen Information auszuwählen;
**dadurch gekennzeichnet, dass** das System (200) dazu eingerichtet ist, abhängig von einer oder mehreren vorbestimmten Geräteklassen des Benutzerinteraktionsgeräts oder der Geräte (1), die mit dem System (200) gekoppelt sind, nicht zuzulassen:
einen oder mehrere vorbestimmte Pfade der mehreren möglichen Pfade von aufeinanderfolgenden Audioclips und/oder Videoszenen, die zur Ausgabe durch die Ausgabeeinheit (8, 9) auszuwählen sind.

2. System (200) nach Anspruch 1, wobei das System (200) dazu eingerichtet ist, den einen oder die mehreren vorbestimmten Pfade der mehreren möglichen Pfade von aufeinanderfolgenden Audioclips und/oder Videoszenen, die zur Ausgabe durch die Ausgabeeinheit (8, 9) auszuwählen sind, und/oder das Abspielen eines Teils des Audio- und/oder Videostreams nicht zuzulassen, abhängig davon, ob ein oder mehrere Teile des Audio- und/oder Videostreams mit dem Benutzerinteraktionsgerät oder den Geräten inkompatibel sind.

3. System (200) nach Anspruch 1 oder 2, wobei die Interaktivitätseinheit (5) ferner dazu eingerichtet ist, die empfangene Information mit einer Logik eines Skripts zu vergleichen, die mit entsprechenden, jeweiligen Audioclips und/oder Videoszenen verbunden sind, um die Auswahl durchzuführen.

4. System (200) nach Anspruch 3, wobei das System (200) dazu eingerichtet ist:
eine Datei, die das Skript umfasst, in Teile zu teilen, und
jeden der Teile in einen entsprechenden, jeweiligen der Audioclips und/oder in eine der Videoszenen einzubetten.

5. System (200) nach einem vorhergehenden Anspruch, wobei das System (200) dazu eingerichtet ist, den einen oder die mehreren vorbestimmten Pfade der mehreren möglichen Pfade von aufeinanderfolgenden Audioclips und/oder Videoszenen, die zur Ausgabe durch die Ausgabeeinheit (8, 9) auszuwählen sind, und/oder das Abspielen eines Teils des Audio- und/oder Videostreams abhängig von einem Typ des Benutzerinteraktionsgeräts oder den Geräten nicht zuzulassen.

6. System (200) nach einem vorhergehenden Anspruch, wobei das System (200) dazu eingerichtet ist, die Geräteklassen der Benutzerinteraktionsgeräte (1), die mit dem System (200) gekoppelt sind, automatisch zu erkennen.

7. System (200) nach einem vorhergehenden Anspruch, wobei das System (200) ferner dazu eingerichtet ist, den Benutzer des Systems (200) dazu aufzufordern, eine Audiodatei und oder ein Video abhängig von den Geräteklassen der Benutzerinteraktionsgeräte (1), die mit dem System gekoppelt sind, zu kaufen, bevor die Ausgabeeinheit (8, 9) den Audio- und/oder Videostream oder beliebige vorbestimmte Clips bzw. Szenen davon ausgeben kann.

8. System (200) nach einem vorhergehenden Anspruch, wobei die von der Interaktivitätseinheit (5) empfangene Information darauf basiert, dass der Benutzer des Systems (200) mit einem oder mehreren Smarthome-Geräten interagiert, die dazu eingerichtet sind, mithilfe von ZigBee, Z-Wave, Bluetooth oder Wi-Fi mit dem System (200) zu interagieren.

9. System (200) nach einem vorhergehenden Anspruch, ferner umfassend eine Internet der Dinge, IoT, -Anwendungsprogrammierschnittstelle (4), die dazu eingerichtet ist, mit dem einen oder den mehreren Benutzerinteraktionsgeräten (1) zu kommunizieren, wobei das eine oder die mehreren Benutzerinteraktionsgeräte (1) Internet der Dinge-Geräte umfassen.

10. System (200) nach einem vorhergehenden Anspruch, das ferner dazu eingerichtet ist:
den Audio- und/oder Videostream zu pausieren oder den Audio- und/oder Videostream an einem vorbestimmten Ende des einen oder der mehreren Audioclips und/oder Videoszenen auf Schleife zu stellen, und
den Audio- und/oder Videostream bei dem ausgewählten Pfad gemäß der Interaktion des Benutzers mit dem einen oder den mehreren Benutzerinteraktionsgeräten (1) fortzusetzen.

11. System (200) nach Anspruch 10, das ferner dazu eingerichtet ist, das Ausgeben des Audio- und/oder Videostreams gemäß einem vorbestimmten Pfad fortzusetzen, wenn ein Zeitraum, innerhalb dem keine Information bezogen auf die Interaktion des Benutzers des Systems (200) mit dem einen oder den mehreren Benutzerinteraktionsgeräten (1) vorliegt, einen vorbestimmten Schwellenzeitraum übersteigt, insbesondere wobei die Benutzerinteraktion mit dem einen oder den mehreren Benutzerinteraktionsgeräten (1) eine bedingte Interaktion umfasst, die von der Interaktivitätseinheit innerhalb des Schwellenzeitraums erhalten worden sein muss, damit der Audio- und/oder Videostream fortgesetzt werden kann.

12. System (200) nach einem vorhergehenden Anspruch, wobei die Auswahl des Pfades durch die Interaktivitätseinheit auf die empfangene Information bezogen auf eines oder mehreres des Folgenden reagiert, und von dem einen oder den mehreren Benutzerinteraktionsgeräten (1) und/oder dem System (200) erkennbar ist:
(i) der Benutzer ändert eine Helligkeit einer das System umgebenden Umgebung,
(ii) der Benutzer ändert eine Temperatur der Umgebung,
(iii) der Benutzer führt eine vorbestimmte Bewegung durch,
(iv) der Benutzer verursacht einen vorbestimmten Ton oder ein auszugebendes Tonmuster,
(v) der Benutzer berührt eins oder mehrere des einen oder der mehreren Benutzerinteraktionsgeräte;
(vi) der Benutzer gibt ein Password in eins oder mehrere des einen oder der mehreren Geräte ein,
(vii) eine Körpertemperatur oder Körpertemperaturänderung des Benutzers,
(viii) ein vorbestimmtes Gas und/oder Rauch hüllt eines oder beides der Umgebung und des einen oder der mehreren Benutzerinteraktionsgeräte ein,
(ix) ein Gasaktuator wird von dem Benutzer aktiviert, und
(x) eine Benutzerbedingung wird mithilfe eines Geräts erkannt, das von dem Benutzer getragen werden kann.

13. System (200) nach einem vorhergehenden Anspruch, das dazu eingerichtet ist, dem Benutzer anzuzeigen, mit welchem Benutzerinteraktionsgerät oder Geräten (1) zu interagieren ist, um zu bewirken, dass die Interaktivitätseinheit den Pfad auswählt.

14. Verfahren zum Auswählen eines Pfades eines Mehrweg-Audio- und/oder Videostreams, wobei das Verfahren umfasst:
Abspielen (402) des Streams,
Herunterladen (404) eines Skripts, das eine Logik umfasst, die Audioclips des Audiostreams und/oder Videoszenen des Video-Streams entspricht,
Empfangen (406) einer Information im Hinblick auf einen Benutzer, der mit einem Eingabegerät interagiert,
Vergleichen (408) der empfangenen Information mit der Logik, und
Auswählen (410) des Pfades für den auszugebenden Stream basierend auf dem Vergleich,
**dadurch gekennzeichnet, dass** das Verfahren ferner umfasst, abhängig von einer oder mehreren vorbestimmten Geräteklassen eines Benutzerinteraktionsgeräts oder Geräten (1), mit dem bzw. denen der Benutzer interagieren kann, um eine Eingabe bereitzustellen, und wobei das Benutzerinteraktionsgerät bzw. die Geräte (1) mit einem System (200) zum Abspielen des Audio- und/oder Videostreams gekoppelt sind, ein Nichtzulassen:
eines oder mehrerer vorbestimmter Pfade des Mehrweg-Audio- und/oder Videostreams zur Ausgabe.

15. Verfahren nach Anspruch 14, wobei mindestens der Vergleich der empfangenen Information mit der Logik und die Auswahl des Pfades für den auszugebenden Stream basierend auf dem Vergleich in einer IoT-Umgebung durchgeführt werden.

## Revendications

1. Système (200) pour lire un flux audio et/ou vidéo présentant de multiples trajets possibles de clips audio et/ou de scènes vidéo consécutifs, le système (200) comprenant :
une unité de sortie (8, 9) pour délivrer le flux audio et/ou vidéo, et
une unité d'interactivité (5) couplée à l'unité de sortie (8, 9), l'unité d'interactivité (5) étant configurée pour :
recevoir des informations concernant une interaction d'un utilisateur du système (200) avec un ou plusieurs dispositifs d'interaction d'utilisateur (1) avec lesquels l'utilisateur peut interagir pour fournir une entrée, le ou les dispositifs d'interaction d'utilisateur (1) étant couplés au système (200), et
sélectionner un trajet de clips audio et/ou de scènes vidéo consécutifs à partir des multiples trajets possibles du flux audio et/ou vidéo, à délivrer par l'unité de sortie (8, 9), sur la base des informations reçues ;
**caractérisé par le fait que** le système (200) est configuré pour empêcher, en fonction d'une ou plusieurs classes de dispositifs prédéterminées du ou des dispositifs d'interaction d'utilisateur (1) couplés au système (200) :
un ou plusieurs trajets prédéterminés des multiples trajets possibles de clips audio et/ou de scènes vidéo consécutifs d'être sélectionnés pour une délivrance par l'unité de sortie (8, 9).

2. Système (200) tel que revendiqué à la revendication 1, dans lequel le système (200) est configuré pour empêcher le ou les trajets prédéterminés des multiples trajets possibles de clips audio et/ou de scènes vidéo consécutifs d'être sélectionnés pour une délivrance par l'unité de sortie (8, 9) et/ou la lecture d'une quelconque partie du flux audio et/ou vidéo en fonction du point de savoir si une ou plusieurs parties du flux audio et/ou vidéo sont incompatibles avec le ou les dispositifs d'interaction utilisateur.

3. Système (200) tel que revendiqué à la revendication 1 ou 2, dans lequel l'unité d'interactivité (5) est en outre configurée pour comparer les informations reçues à une logique d'un script affilié à des clips audio et/ou des scènes vidéo respectifs, correspondants pour réaliser la sélection.

4. Système (200) tel que revendiqué à la revendication 3, dans lequel le système (200) est configuré pour :
diviser un fichier comprenant le script en fractions, et
incorporer chacune des fractions à l'intérieur de l'un respectif, correspondant des clips audio et/ou de l'une respective des scènes vidéo.

5. Système (200) tel que revendiqué à l'une quelconque des revendications précédentes, dans lequel le système (200) est configuré pour empêcher le ou les trajets prédéterminés des multiples trajets possibles de clips audio et/ou de scènes vidéo consécutifs d'être sélectionnés pour une délivrance par l'unité de sortie (8, 9) et/ou la lecture d'une quelconque partie du flux audio et/ou vidéo en fonction d'un type du ou des dispositifs d'interaction d'utilisateur.

6. Système (200) tel que revendiqué à l'une quelconque des revendications précédentes, dans lequel le système (200) est configuré pour détecter automatiquement les classes de dispositifs des dispositifs d'interaction d'utilisateur (1) couplés au système (200).

7. Système (200) tel que revendiqué à l'une quelconque des revendications précédentes, dans lequel le système (200) est en outre configuré pour inviter l'utilisateur du système (200) à acheter un fichier audio et/ou une vidéo en fonction des classes de dispositifs des dispositifs d'interaction d'utilisateur (1) couplés au système avant que l'unité de sortie (8, 9) ne soit apte à délivrer le flux audio et/ou vidéo ou de quelconques clips ou scènes prédéterminés, respectivement, de celui-ci.

8. Système (200) tel que revendiqué à l'une quelconque des revendications précédentes, dans lequel les informations reçues par l'unité d'interactivité (5) sont basées sur l'utilisateur du système (200) interagissant avec un ou plusieurs dispositifs domestiques intelligents configurés pour interagir avec le système (200) à l'aide de ZigBee, Z-Wave, Bluetooth ou Wi-Fi.

9. Système (200) tel que revendiqué à l'une quelconque des revendications précédentes, comprenant en outre une interface de programmation d'application de l'Internet des objets, IoT, (4) configurée pour communiquer avec le ou les dispositifs d'interaction d'utilisateur (1), le ou les dispositifs d'interaction d'utilisateur (1) comprenant des dispositifs de l'Internet des objets.

10. Système (200) tel que revendiqué à l'une quelconque des revendications précédentes, configuré en outre pour :
mettre en pause le flux audio et/ou vidéo ou faire tourner le flux audio et/ou vidéo dans une boucle au niveau d'une fin prédéterminée d'un ou plusieurs des clips audio et/ou scènes vidéo, et
continuer le flux audio et/ou vidéo avec le trajet sélectionné selon l'interaction de l'utilisateur avec le ou les dispositifs d'interaction d'utilisateur (1).

11. Système (200) tel que revendiqué à la revendication 10, configuré en outre pour continuer la délivrance du flux audio et/ou vidéo selon un trajet prédéterminé si une période temporelle, dans laquelle il n'y a aucune information concernant l'interaction de l'utilisateur du système (200) avec le ou les dispositifs d'interaction d'utilisateur (1), dépasse une période temporelle de seuil prédéterminée, en particulier dans lequel l'interaction d'utilisateur avec le ou les dispositifs d'interaction d'utilisateur (1) comprend une interaction conditionnelle qui est requise comme ayant été reçue par l'unité d'interactivité dans la période temporelle de seuil pour le flux audio et/ou vidéo à continuer.

12. Système (200) tel que revendiqué à l'une quelconque des revendications précédentes, dans lequel la sélection du trajet par l'unité d'interactivité est sensible aux informations reçues concernant un ou plusieurs de ce qui suit, et apte à être détectée par le ou les dispositifs d'interaction d'utilisateur (1) et/ou le système (200) :
(i) l'utilisateur changeant une luminosité d'un environnement entourant le système,
(ii) l'utilisateur changeant une température de l'environnement,
(iii) l'utilisateur réalisant un mouvement prédéterminé,
(iv) l'utilisateur amenant un son ou un motif sonore prédéterminé à être émis,
(v) l'utilisateur touchant un ou plusieurs du ou des dispositifs d'interaction d'utilisateur ;
(vi) l'utilisateur entrant un mot de passe dans un ou plusieurs du ou des dispositifs,
(vii) une température corporelle ou un changement de température corporelle de l'utilisateur,
(viii) un gaz et/ou une fumée prédéterminé(e) étouffant l'un ou les deux de l'environnement et du ou des dispositifs d'interaction utilisateur,
(ix) un actionneur de gaz qui est activé par l'utilisateur, et
(x) un état d'utilisateur qui est détecté à l'aide d'un dispositif apte à être porté par l'utilisateur.

13. Système (200) tel que revendiqué à l'une quelconque des revendications précédentes, configuré pour indiquer à l'utilisateur avec quel ou quels dispositifs d'interaction d'utilisateur (1) interagir pour amener l'unité d'interactivité à sélectionner ledit trajet.

14. Procédé de sélection d'un trajet d'un flux audio et/ou vidéo multi-trajet, le procédé comprenant :
lire (402) le flux,
télécharger (404) un script comprenant une logique correspondant à des clips audio du flux audio et/ou à des scènes vidéo du flux vidéo,
recevoir (406) des informations concernant un utilisateur interagissant avec un dispositif d'entrée,
comparer (408) les informations reçues à la logique, et
sélectionner (410) le trajet pour le flux à délivrer sur la base de la comparaison,
**caractérisé par le fait que** le procédé comprend en outre le fait d'empêcher, en fonction d'une ou plusieurs classes de dispositifs prédéterminées d'un ou plusieurs dispositifs d'interaction d'utilisateur (1) avec lesquels l'utilisateur peut interagir pour fournir une entrée et dans lesquels le ou les dispositifs d'interaction d'utilisateur (1) sont couplés à un système (200) pour lire le flux audio et/ou vidéo :
un ou plusieurs trajets prédéterminés du flux audio et/ou vidéo multi-trajet pour une délivrance.

15. Procédé tel que revendiqué à la revendication 14, dans lequel au moins la comparaison des informations reçues à la logique et la sélection du trajet pour le flux à délivrer sur la base de la comparaison sont réalisées dans un environnement IoT.
